**Europäisches Patentamt**

**European Patent Office**

**Office européen des brevets**

(19)

(11) Veröffentlichungsnummer : **0 289 460 B1**

## (12) EUROPÄISCHE PATENTSCHRIFT

(45) Veröffentlichungstag der Patentschrift :
**10.07.91 Patentblatt 91/28**

(51) Int. Cl.⁵ : **B23B 5/40**

(21) Anmeldenummer : **88810255.5**

(22) Anmeldetag : **21.04.88**

(54) **Kugeldreheinrichtung für Drehmaschinen.**

(30) Priorität : **27.04.87 CH 1597/87**

(43) Veröffentlichungstag der Anmeldung :
**02.11.88 Patentblatt 88/44**

(45) Bekanntmachung des Hinweises auf die
Patenterteilung :
**10.07.91 Patentblatt 91/28**

(84) Benannte Vertragsstaaten :
**CH DE FR GB IT LI**

(56) Entgegenhaltungen :
**DE-C- 3 692**
**FR-A- 2 550 976**

(73) Patentinhaber : **Kummer Frères SA, Fabrique**
**de machines**
**Rue de la Promenade 26**
**CH-2720 Tramelan (CH)**

(72) Erfinder : **Leiber, Hans-Jürgen**
**Grillons 7**
**CH-2270 Tramelan (CH)**
Erfinder : **Meyer, Jean-Philippe**
**Le Préparotte 3**
**CH-2722 Les Reussiles (CH)**
Erfinder : **Kummer, Christian**
**26-Mars 18**
**CH-2720 Tramelan (CH)**

(74) Vertreter : **Rochat, Daniel Jean et al**
**Bovard AG Patentanwälte VSP**
**Optingenstrasse 16**
**CH-3000 Bern 25 (CH)**

## Beschreibung

Die Erfindung bezieht sich auf eine Kugeldreheinrichtung für Drehmaschinen zum Erzeugen von Kugelformen, bestehend aus einem Vorschubmotor, einer von diesem Motor angetriebenen drehbaren Hauptwelle, einer verschiebbaren Werkzeugbefestigungsplatte mit einem Werkzeughalter und Drehgebermitteln die in Wirkverbindung mit der Hauptwelle sind, siehe FR-A-2550976.

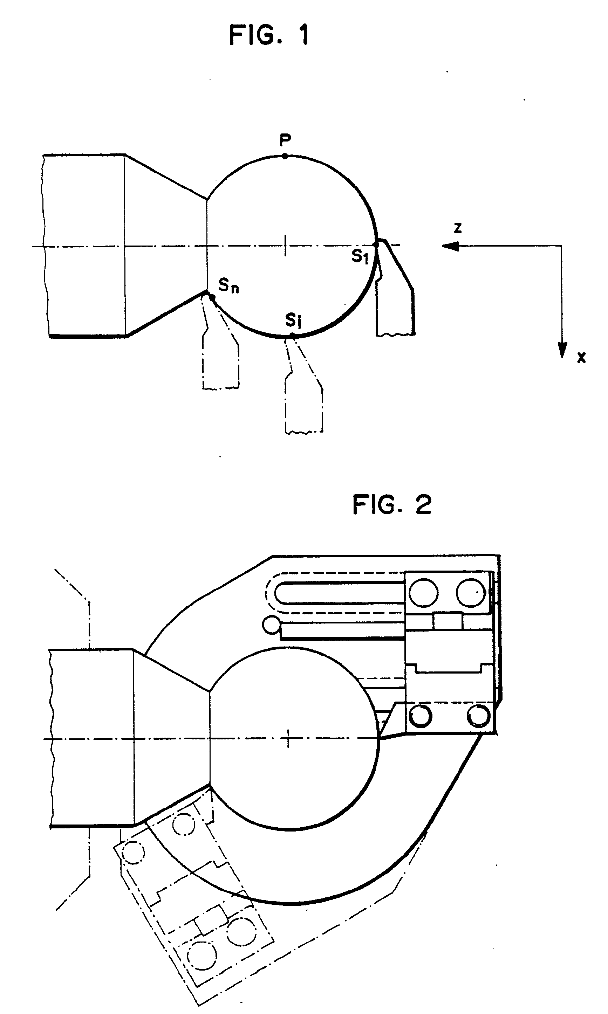

Bekanntlich können auf Drehmaschinen, die mit einer Bahnsteuerung und einem Kreuzschlitten ausgerüstet sind, ohne besondere Zusatzeinrichtungen Werkstücke erzeugt werden, deren Form kugelförmige Abschnitte aufweisen. In vielen Fällen genügt dabei die Formgenauigkeit der so hergestellten Werkstücke. Höchste Ansprüche an die Formgenauigkeit der Kugelpartien können aber mit diesem Arbeitsverfahren nicht erfüllt werden. Dies hauptsächlich aus zwei Gründen : zum ersten schneidet der Drehstahl, je nach seiner momentanen Lage, jeweils an einer anderen Stelle $S_1$, $S_i$, $S_n$ seiner Schneide (Fig. 1). Entspricht nun die Schneide des Drehwerkzeuges nicht einem perfekten Radius, dann hat auch das bearbeitete Werkstück keine perfekte Kugelform.

Ferner haben auch sehr starre Kreuzschlitten, selbst in Vorschubrichtung, eine Umkehrspanne. Dies bedeutet, dass der Schlitten bei einem Richtungswechsel diesen nicht ohne Verzögerung vollzieht, sondern für einen Moment in seiner Lage verharrt. Dadurch ergibt sich beim Drehen einer Kugelform in Punkt P (Fig. 1) ein kurzes zylindrisches Stück und somit eine Abweichung von der idealen Form.

Die beschriebenen Probleme sind bekannt und es gibt daher zum Drehen hochgenauer Kugelformen, schon seit langem, sogenannte Kugeldreheinrichtungen. Solche Einrichtungen sind z.B. im Buch "Drehautomaten" von Dr.-Ing. Helmut Jaeger auf Seite 500 beschrieben, Carl Hanser-Verlag. Alle diese Einrichtungen arbeiten nach dem gleichen Grundprinzip. Das Drehwerkzeug schwenkt dabei um einen Drehpunkt. Dadurch wird erreicht, dass das Werkzeug immer an den gleichen Stellen seiner Schneide schneidet und, dass ausserdem die Probleme der Umkehrspanne, wie sie bei einem Kreuzschlitten auftreten, im wesentlichen beseitigt sind, da sich das Drehwerkzeug auf einer Kreisbahn, deren Genauigkeit nur von der Lagerung des Schwenkpunktes bestimmt wird, bewegt.

Bei den bekannten Kugeldreheinrichtungen wird die Schwenkbewegung entweder vom Längsschlitten abgeleitet oder z.B. von einem hydraulischen Schwenkantrieb erzeugt. Im ersten Fall wird der Schwenkwinkel durch den Längsweg des Längsschlittens bestimmt, im zweiten Fall durch Festanschläge eingestellt. In keinem Fall kann aber der Schwenkwinkel direkt durch eine durch Computer numerisch gesteuerte Steuerung (CNC-Steuerung) programmiert werden. Im weiteren muss bei diesen Kugeldreheinrichtungen der Werkzeugverschleiss durch eine von Hand vorzunehmende Verschiebung des Drehwerkzeuges korrigiert werden. Dies sind schwerwiegende Nachteile bei einer automatischen und flexiblen Fertigung wie sie heute angestrebt wird.

Aufgabenstellung der Erfindung war es, eine Kugeldreheinrichtung zu schaffen, bei der der Schwenkwinkel über eine CNC-Steuerung programmiert werden kann und bei der auch die aufgrund des Verschleisses des Werkzeuges notwendige Werkzeugkorrektur über die Eingabe des zu korrigierenden Wertes in die CNC-Steuerung möglich ist. Die Lösung dieser Aufgabe ist nicht einfach, muss doch die ganze Einrichtung sehr kompakt aufgebaut werden, da sonst die Kugeldreheinrichtung mit dem Spannwerkzeug oder dem Spindelstock kollidiert.

Die Lösung der Aufgabe wird bei der eingangs beschriebenen Erfindung darin gesehen, dass eine in der Hauptwelle koaxial gelagerte Hilfswelle an ihrem oberen Ende einen über Nutenmittel mit der Werkzeugbefestigungsplatte in Wirkverbindung stehenden Exzenter, und an ihrem unteren Ende ein mit letzterem festverbundenes und mit einer Aussparung versehenes Rad aufweist, wobei genannte Aussparung in einem feststehenden Anschlagnocken in Eingriff kommen kann, so dass der Vorschubmotor sowohl die Drehbewegung der Kugeldreheinrichtung, als auch die durch relative Drehbewegung zwischen der Hauptwelle und der Hilfswelle erfolgende Werkzeugkorrektur erwirken kann.

Die Erfindung ist nachstehend mit Bezugnahme auf die Zeichnung, anhand eines Ausführungsbeispiels, näher erläutert.

Es zeigen :

Fig. 1 und 2 schematische Darstellungen zur Erläuterung der oben beschriebenen Problematik,

Fig. 3 eine Vorderansicht, teilweise im Schnitt, der erfindungsgemässen Kugeldreheinrichtung,

Fig. 4 eine Draufsicht der Kugeldreheinrichtung,

Fig. 5 einen Schnitt längs der Linie V-V der Fig. 4,

Fig. 6 einen Schnitt längs der Linie VI-VI der Fig. 4 der Werkzeugbefestigungsplatte,

Fig. 7 eine Draufsicht der Werkzeugbefestigungsplatte,

Fig. 8 einen Schnitt längs Linie VIII - VIII der Fig. 7,

Fig. 9 A-D sind schematische Darstellungen zur Erklärung des Vorganges der Werkzeugkorrektur.

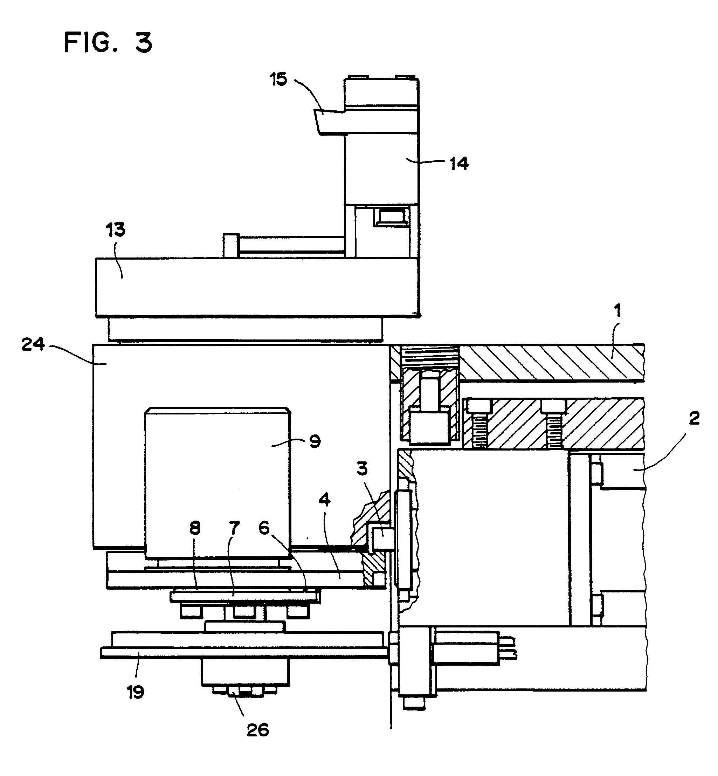

Fig. 3, 4 und 5 stellen die vorzugsweise auf den Kreuzschlitten einer Drehmaschine aufgebaute Kugeldreheinrichtung dar, die sich somit wie ein normales Drehwerkzeug nach Bedarf in ihre Arbeitsstellung bringen lässt.

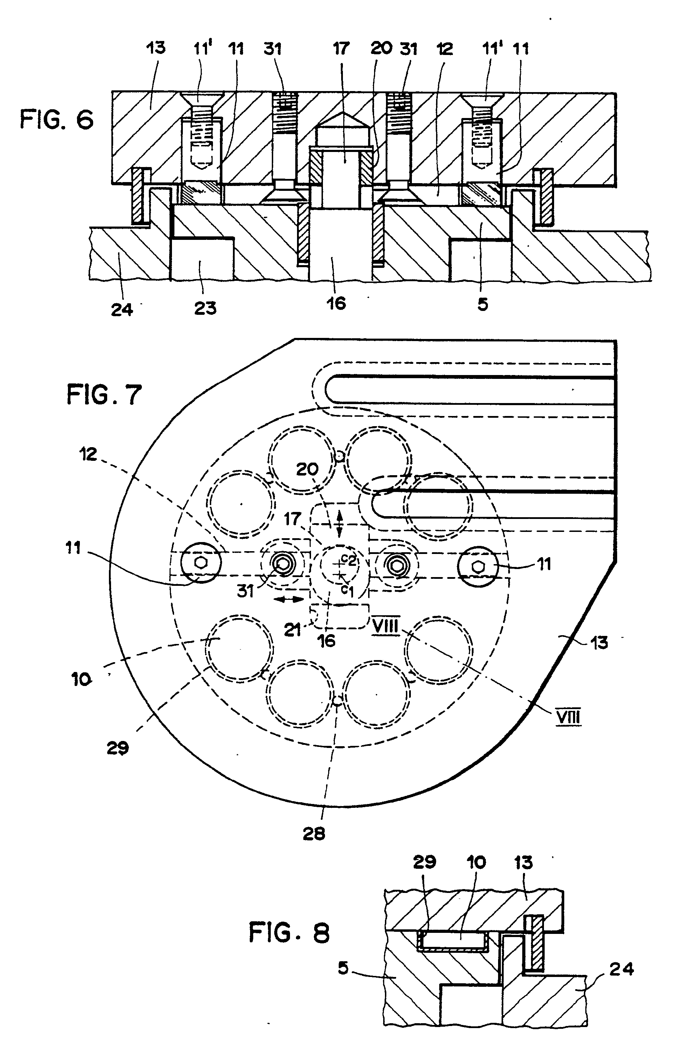

Im wesentlichen besteht die Kugeldreheinrichtung aus einem Grundkörper 1, mit dem sie sich auf einem Kreuzschlitten befestigen lässt, einem elektrischen Vorschubmotor 2, einem Reibradgetriebe 3, 4, einer mit dem Reibrad 4 fest verbundenen, als Hauptwelle dienenden Welle 5, einem mit dem Reibrad 4 und der Welle 5 über ein Zahnriemengetriebe 6, 7, 8 in Wirkverbindung stehenden Drehgeber 9, einer auf der Welle 5 montierten, mit Magneten 10 versehenen und mit den Stiften 11, 11', in der Nut 12 (Fig. 6, 7, 8) geführten Werkzeugbefestigungsplatte 13, einem auf der Werkzeugbefestigungsplatte aufgeschraubten Werkzeughalter 14, einem Drehwerkzeug 15, einer in der Welle 5 längs- und drehbeweglich gelagerten, als Kolben ausgestattete Hilfswelle 16 die an ihrem oberen Ende eine Exzenterwelle 17 aufweist und an deren unteren Ende eine, eine Nute 18 aufweisende Scheibe 19 befestigt ist, und einen am Körper 24 befestigten Anschlagnocken 22. Die gemeinsame Drehachse der Welle 5 und des Kolbens 16 läuft durch $c_1$; diejenige der Exzenterwelle 17 läuft durch $c_2$. Ferner greift die Exzenterwelle 17 in einen in der Nute 21 der Werkzeugbefestigungsplatte 13 geführten Nutenstein 20 ein.

Durch den elektrischen Vorschubmotor 2 wird über das Reibradgetriebe 3, 4 die, im Körper 24 durch die Rollenlager 23 gelagerte Welle 5 und mit ihr die Werkzeugbefestigungsplatte 13, sowie der darauf aufgeschraubte Werkzeughalter 14 mit seinem Werkzeug 15 angetrieben. Dabei führt das Drehwerkzeug 15 eine kreisförmige Schwenkbewegung um die durch $C_1$ gehende Drehachse der Welle 5 aus und erzeugt somit auf dem zu bearbeitenden Werkstück eine hochgenaue Kugelform.

Die Grösse des Schwenkwinkels, welche von der Grössse des zu erzeugenden Kugelabschnittes abhängig ist, wird durch den über das Zahnriemengetriebe 6, 7, 8 verbundenen Drehgeber 9 erfasst und als elektrisches Signal in bekannter Weise in einer CNC-Steuerung verarbeitet.

Dadurch ist es möglich, die Grösse des Schwenkwinkels als Parameter direkt oder über ein Programm in die CNC-Steuerung einzugeben.

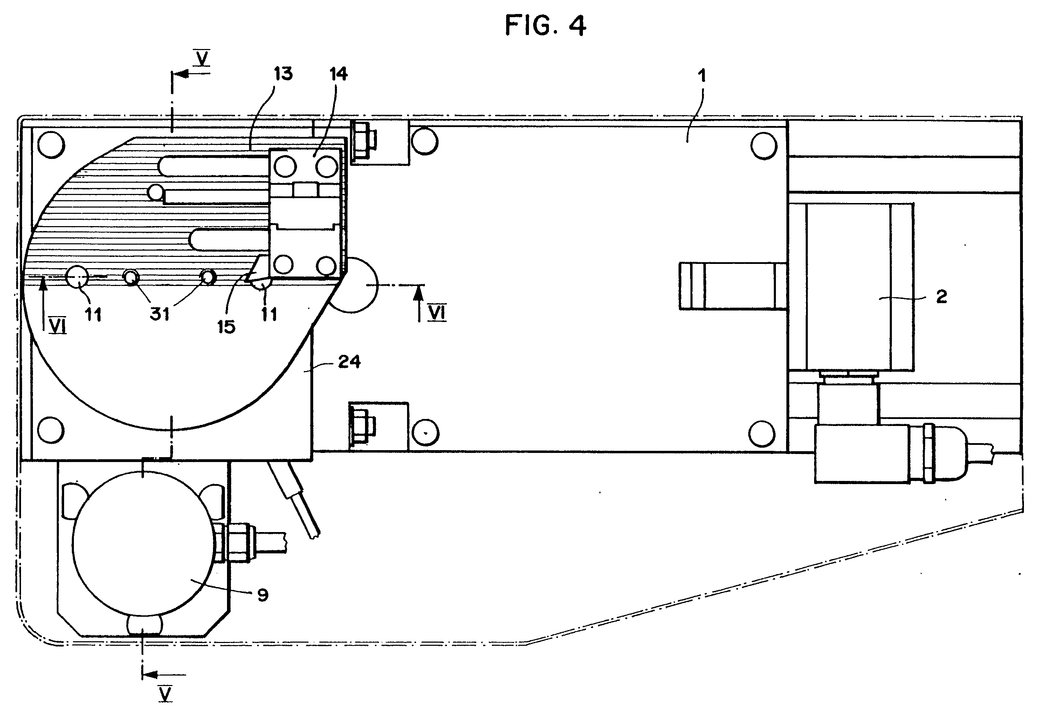

Der Vorgang der automatischen Werkzeugkorrektur wird durch den Abruf eines Unterprogramms eingeleitet ; er wird nachstehend anhand der Fig. 4, 5, 7, 8 und 9 erläutert. Dabei wird davon ausgegangen, dass der Korrekturwert schon in die CNC-Steuerung eingegeben wurde.

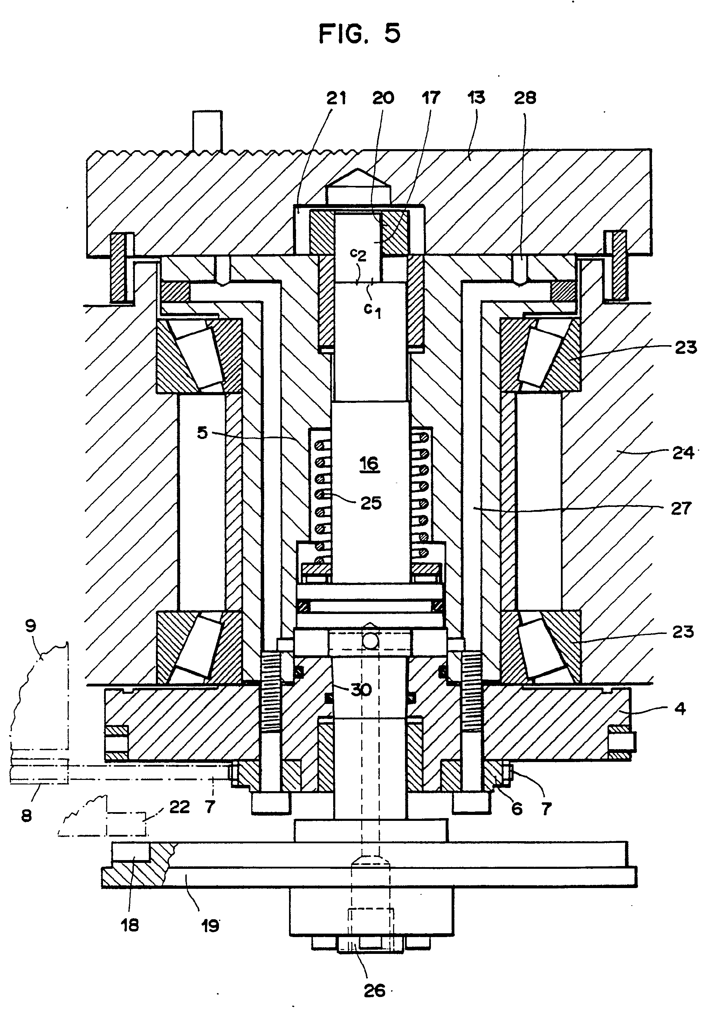

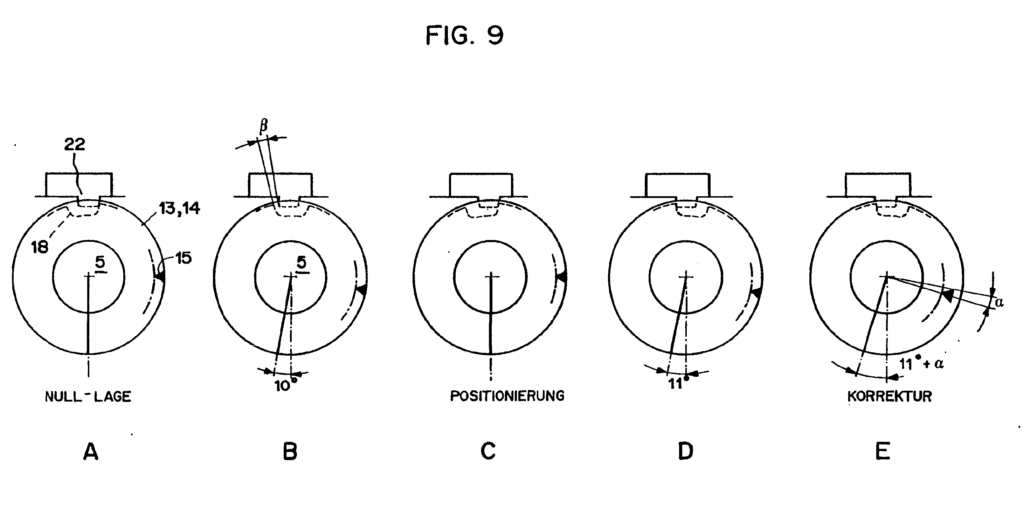

Zunächst dreht der Vorschubmotor 2 über das Reibradgetriebe 3, 4 die Welle 5 und alle mit ihr verbundenen Teile 13, 14, 15 sowie Scheibe 19 und den mit ihr verbundenen Kolben 16 in eine um 10 Grad gegenüber der Null-Lage verschobenen Stellung. Die Null-Lage ist diejenige, wo die Schneide des Drehwerkzeuges 15 sich auf der Drehachse des zu verarbeitenden Werkstückes befindet (Axis des Drehbankes, Fig. 2, 4 und Fig. 9A). In dieser erwähnten Stellung stehen sich die Nute 18 und der Anschlagnocken 22 so gegenüber, dass sie ineinander greifen können. Um das Berühren von Nocken und Nute beim Einfahren zu vermeiden, wird eine Sicherheitsmarge β vorgesehen. (Fig. 9B). Darüber hinaus ist die Werkzeugbefestigungsplatte 13 mit der Welle 5 durch die Magnetkräfte der Dauermagnete 10 fest verbunden. Die in Fig. 6 dargestellten Schrauben 31 weisen keine Befestigungsfunktion auf ; sie dienen lediglich der Sicherung und werden von oben angezogen, so, dass genannte Werkzeugbefestigungsplatte 13, wie nachstehend erläutert, sich von der Welle 5 leicht abheben kann. Nun wird der Kolben 16 über die Bohrungen 26, 27 mit Druckluft beaufschlagt und bewegt sich gegen den Druck der Feder 25 bis zu seinem Anschlag nach oben. Er befreit sich dabei aus seiner, durch den Konus 30 gebildeten kraftschlüssigen Verbindung mit dem Reibrad 4 (Fig. 5). Indem sich der Kolben 16 und die mit ihm verbundene Scheibe 19 nach oben bewegen, greift der Anschlagnocken 22 in die Nute 18 der Scheibe 19 ein (Fig. 9B).

Gleichzeitig strömt die Druckluft durch die Bohrungen 27 und gelangt in die Ringflächen 29 die untereinander durch Bohrungen 28 verbunden sind (Fig. 5, 7, 8).

Durch den in den Ringflächen 29 entstehende Luftdruck wird die Wirkung der Haltekraft der Dauermagnete 10 weitgehend aufgehoben. Als nächstes wird nun die Welle 5 über das Reibradgetriebe 3, 4, durch den Vorschubmotor 2, in Richtung Null-Lage zurückgedreht (Fig. 9C). Aufgrund der bestehenden Reibungskräfte dreht sich dabei der Kolben 16 mit, bis die Nut 18 am Nocken 22 anschlägt. Der Kolben 16 kann sich nun nicht mehr drehen, er ist in der Null-Lage ; nur die Welle 5 dreht sich noch um den Restwinkel β weiter, bis auch sie die Null-Lage erreicht. Gleichzeitig wird auch durch die Exzenterwelle 17 über den Nutenstein 20 die Werkzeugbefestigungsplatte 13 in ihre Null-Stellung gebracht (Fig. 9C). Somit werden Fehleranhäufungen vermieden ; der Korrekturvorgang ist fehlerfrei.

Aus dieser Null-Lage heraus dreht nun der Vorschubmotor 2 das ganze System, Welle 5, Kolben 16 und die mit ihm verbundene Scheibe 19, um 11 Grad in die entgegengesetzte Richtung (Fig. 9D). Nach diesem Weg schlägt der Nocken 22 an der Nutenwand an und der Kolben 16 kann sich somit nicht mehr weiter drehen. Die Welle 5 wird aber noch um den errechneten Betrag, der dem eingegebenen Korrekturwert entspricht, weitergedreht (Fig. 9E) und verschiebt über die Exzenterwelle 17 die Werkzeugbefestigungsplatte 13 und mit ihr den Werkzeughalter 14 mit dem eingespannten Werkzeug 15 in linearer Richtung um den gewünschten Korrekturwert. Dabei gleitet der Nutenstein 20 in der Nute 21 (Fig. 7). Zum Abschluss des Korrekturvorganges wird das oben genannte System entlüftet und somit die kraftschlüssige Verbindung wieder hergestellt.

Die Haltekräfte der Dauermagnete 10 kommen wieder zur Wirkung, der Kolben 16 wird durch die Kraft der Feder 25 wieder in seine durch den Konus 30 (Fig. 5) gebildete kraftschlüssige Verbindung mit dem Reibrad 4 gedrückt und die Scheibe 19 aus ihrem Eingriff mit dem Anschlagnocken 22 befreit. Damit ist auch das Unterprogramm zur Werkzeugkorrektur beendet und es kann mit der normalen Drehbearbeitung weiter gefahren werden.

Der Genauigkeit wegen, wird die genannte Winkelverschiebung auf ein Gebiet begrenzt, in dem die durch den Exzenter bewirkte Verschiebung der Werkzeugbefestigungsplatte 13 praktisch linear mit der Winkelverschiebung ist. Mit anderen Worten kann sich der Exzenter 17, im beschriebenen Beispiel, immer nur im Bereich −5°, +5° bewegen. Der maximale Wert für $\alpha$ ist also 10°. Dabei ist die Rotationsfreiheit der Scheibe 19 in ihrer oberen Stellung, d.h. wenn sich der Anschlagnocken 22 in Eingriff mit der Aussparung 18 befindet, auf 11° begrenzt. Die Sicherheitsmarge $\beta$ gegen Berühren von Nocke und Nut beim Einfahren wird im Beispiel gleich 1° gesetzt.

Alle Drehbewegungen werden während des Vorganges vom Drehgeber 9 gemessen und der CNC-Steuerung gemeldet. Im Beispiel ist der Exzenter so ausgelegt, dass eine Winkelverschiebung von 0,01 Grad einer Korrektur des Kugelradius von 0,5 μm entspricht.

**Patentansprüche**

1. Kugeldreheinrichtung für Drehmaschinen zum Erzeugen von Kugelformen, bestehend aus einem Vorschubmotor (2), einer von diesem Motor angetriebenen drehbaren Hauptwelle (5), einer verschiebbaren Werkzeugbefestigungsplatte (13) mit einem Werkzeughalter (14) und Drehgebermitteln (6, 7, 8, 9) die in Wirkverbindung mit der Hauptwelle sind, dadurch gekennzeichnet, dass eine in der Hauptwelle (5) koaxial gelagerte Hilfswelle (16) an ihrem oberen Ende einen über Nutenmitteln (20, 21) mit der Werkzeugbefestigungsplatte (13) in Wirkverbindung stehenden Exzenterwelle (17), und an ihrem unteren Ende ein mit letzterem festverbundenes und mit einer Aussparung (18) versehenes Rad (19)) aufweist, wobei genannte Aussparung in einem feststehenden Anschlagnocken (22) in Eingriff kommen kann, so dass der Vorschubmotor (2) sowohl die Drehbewegung der Kugeldreheinrichtung, als auch die durch relative Drehbewegung zwischen der Hauptwelle (5) und der Hilfswelle (16) erfolgende Werkzeugkorrektur erwirken kann.

2. Kugeldreheinrichtung nach Anspruch 1, dadurch gekennzeichnet, dass die auf die Hauptwelle (5) durch den Vorschubmotor (2) erzeugte Drehbewegung über ein Reibradgetriebe (3, 4) erfolgt.

3. Kugeldreheinrichtung nach Anspruch 1 oder 2, dadurch gekennzeichnet, dass die Hilfswelle (16) ein pneumatisch betriebener Kolben ist, wobei dieser sich durch den über eine Bohrung (26) erzeugten Luftdruck, gegen die Wirkung einer Feder (25) nach oben bewegen kann, so dass die Aussparung (18) des mit dem Kolben festverbundenen Rades (19) mit dem feststehenden Anschlagnocken (22) zusammen wirken können.

4. Kugeldreheinrichtung nach Anspruch 3, dadurch gekennzeichnet, dass die verschiebbare Werkzeugbefestigungsplatte (13) auf der Hauptwelle (15) durch bevorzüglich in der oberen Kopffläche genannter Hauptwelle eingesetzte Permanentmagnete (10) gehalten wird und dass die dadurch vorhandene Haltekraft im wesentlichen mit Druckluft über Bohrungen (27, 28) aufgehoben werden kann.

5. Kugeldreheinrichtung nach Anspruch 4, dadurch gekennzeichnet dass die Rotationsfreiheit der Scheibe (19) und somit der Hauptwelle (5) bei der Eingriffsstellung der Nocke (22) in die Aussparung (18) 11° beträgt.

6. Kugeldreheinrichtung nach Anspruch 5, dadurch gekennzeichnet, dass jeder Korrekturvorgang, zur Vermeidung einer Fehleranhäufung, aus einer ursprünglichen, gleichbleibenden Null-Lage ausgeht.

7. Kugeldreheinrichtung nach Anspruch 6, dadurch gekennzeichnet, dass die Werkzeugbefestigungsplatte (13) durch Drehung der Hauptwelle (5), bei festgehaltener Exzenterwelle (17) über den in der Nute (21) gleitende Nutenstein (20) in linearer Richtung verschoben wird, wobei die Exzenterwelle (17) sich in einem begrenzten Bereich bewegen kann, in dem die durch den Exzenter bewirkte Verschiebung der Werkzeugbefestigungsplatte (13) praktisch noch linear mit der zur Korrektur notwendigen Winkelverschiebung ist.

8. Kugeldreheinrichtung nach Anspruch 7, dadurch gekennzeichnet dass die Exzenterwelle (17) sich in einem Bereich zwischen −5° und +5° bewegen kann.

9. Kugeldreheinrichtung nach einem der Ansprüche 1 bis 8, dadurch gekennzeichnet, dass alle Bewegungen durch Computer numerisch gesteuert sind (CNC-Steuerung) und dass die Drehgeschwindigkeit der Hauptwelle (5) die Grösse des Drehwinkels und die Grösse der Werkzeugkorrektur als Parameter in die CNC-Steuerung eingegeben werden können.

**Claims**

1. A ball turning device for turning machines for producing spherical shapes, comprising a feed motor (2), a rotary main shaft (5) driven by this motor, a displaceable tool-fastening plate (13) with a tool holder (14) and shaft encoder means (6, 7, 8, 9) operatively connected to the main shaft, characterized in that in the main shaft (5) a coaxially mounted auxiliary shaft (16) has at its upper end an eccentric shaft (17) operatively connected via groove means (20, 21) with the tool-fastening plate (13), and at its lower end a wheel (19) provided with a recess (18), said wheel being firmly connected to said eccentric shaft, said recess being engageable with a fixed lug cam (22) so that the feed motor (2) can effect both the rotary motion of the ball turning device and carry out the tool correction arising from the relative rotary motion between the main shaft (5) and the auxiliary shaft (16).

2. The ball turning device of claim 1, characterized in that the rotary motion created on the main shaft (5) by the feed motor (2) is transmitted via a friction gear (3, 4).

3. The ball turning device of claim 1 or 2,characterized in that the auxiliary shaft (16) is a pneumatically driven piston being able on account of the air pressure created via a bore (26) to move upwards against the effect of a spring (25), so that the recess (18) of the wheel (19) firmly connected to the piston can operate together with the fixed lug cam.

4. The ball turning device of claim 3, characterized in that the displaceable tool-fastening plate (13) is held on the main shaft (5) preferably by means of permanent magnets disposed in the upper head surface of said main shaft and in that the cohesive force thus created can for the most part be neutralized with air pressure via bores (27, 28).

5. The ball turning device of claim 4, characterized in that the rotational freedom of the disk (19) and hence of the main shaft (5) when the lug cam (22) is engaged with the recess (18) is 11°.

6. The ball turning device of claim 5, characterized in that to avoid an accumulation of errors, every correction operation starts from an original, unvarying zero position.

7. The ball turning device of claim 6, characterized in that the tool-fastening plate (13) is displaced in linear direction by rotation of the main shaft (5), when the eccentric shaft (17) is held fast via the sliding block (20) sliding in the groove (21), the eccentric shaft (17) being capable of moving within a limited range in that the displacement of the toolfastening plate (13) caused by the eccentric shaft is still substantially linear with the angular displacement necessary for the correction.

8. The ball turning device of claim 7, characterized in that the eccentric shaft (17) is capable of moving within a range between –5° and +5°.

9. The ball turning device of one of claims 1 to 8, characterized in that all movements are numerically controlled by computer (CNC-control) and in that the speed of rotation of the main shaft (5), the magnitude of the angle of rotation and the magnitude of the tool correction can be entered as parameters into the CNC-control.

## Revendications

1. Dispositif de tournage sphérique pour tour, servant à produire des formes sphériques, comprenant un moteur d'avancement (2), un arbre principal (5) entraîné par ce moteur, une plaque de fixation d'outils (13) décalable et portant un support d'outils (14), de même que des moyens (6, 7, 8, 9) d'entraînement en rotation qui sont en liaison avec l'arbre principal, caractérisé en ce qu'un arbre auxiliaire (16) monté par palier, coaxialement, dans l'arbre principal (5) présente : à son extrémité supérieure un arbre excentrique (17) se trouvant en liaison active avec la plaque de fixation d'outils (13) par l'intermédiaire de moyens à encoches (20, 21), et, à son extrémité inférieure, une roue (19) fermement reliée à l'arbre excentrique (17) et munie d'une creusure (18), cette creusure pouvant venir en engagement avec une butée fixe (22) de façon que le moteur d'entraînement (2) puisse assurer aussi bien le mouvement rotatif du dispositif de tournage sphérique que la correction d'outils résultant d'un mouvement relatif rotatif entre l'arbre principal (5) et l'arbre auxiliaire (16).

2. Dispositif de tournage sphérique selon la revendication 1, caractérisé en ce que le mouvement rotatif engendré sur l'arbre principal (5) par le moteur d'entraînement (2) intervient par un rouage d'entraînement à frottement (3, 4).

3. Dispositif de tournage sphérique selon la revendication 1 ou 2, caractérisé en ce que l'arbre auxiliaire (16) est un piston actionné pneumatiquement, celui-ci pouvant se mouvoir vers le haut, contre l'action d'un ressort (25), par l'effet d'une pression d'air amenée par un perçage (26), de façon que la creusure (18) de la roue (19) fixement reliée au piston puisse coopérer avec la butée fixe (22).

4. Dispositif de tournage sphérique selon la revendication 3, caractérisé en ce que la plaque de fixation d'outils (13) est tenue sur l'arbre principal (5) par des aimants permanents (10) encastrés de préférence dans la surface supérieure de tête dudit arbre principal, et en ce que la force de maintien ainsi obtenue peut être essentiellement supprimée par la pression d'air parvenant par des perçages (27, 28).

5. Dispositif de tournage sphérique selon la revendication 4, caractérisé en ce que la liberté de rotation de la roue (19) et par-là de l'arbre principal (5) se monte à 11° lors de la position d'engagement de la butée (22) dans la creusure (18).

6. Dispositif de tournage sphérique selon la revendication 5, caractérisé en ce que chaque processus de correction part d'une position zéro initiale constante, de façon à empêcher un cumul des erreurs.

7. Dispositif de tournage sphérique selon la revendication 6, caractérisé en ce que la plaque de fixation d'outils (13) est décalée en direction linéaire par rotation de l'arbre principal (5) lors du maintien de l'arbre excentrique (17) par une noix (20) coulissant dans l'encoche (21), l'arbre excentrique (17) pouvant se mouvoir en un domaine limité dans lequel le décalage de la plaque de fixation d'outils (13) provoqué par l'excentrique est pratiquement encore linéaire relativement au décalage angulaire nécessaire à la correction.

8. Dispositif de tournage sphérique selon la revendication 7, caractérisé en ce que l'arbre excentrique (17) peut se mouvoir dans un domaine situé entre −5° et +5°.

9. Dispositif de tournage sphérique selon l'une des revendications 1 à 8, caractérisé en ce que tous les mouvements sont commandés numériquement par un ordinateur (commande CNC) et en ce que la vitesse de rotation de l'arbre principal (5), la grandeur de l'angle rotatif et la grandeur de la correction d'outils peuvent être introduites comme un paramètre dans la commande CNC.

# FIG. 1

# FIG. 2

# FIG. 3

# FIG. 4

EP 0 289 460 B1

# FIG. 5

FIG. 6

FIG. 7

FIG. 8

FIG. 9

A  NULL-LAGE

5

13,14

15

22

18

B  10°

5

β

C  POSITIONIERUNG

D  11°

E  KORREKTUR

11° + α

α